# EUROPEAN PATENT APPLICATION

(11) **EP 4 427 925 A1**
(43) Date of publication of application: **11.09.2024**
(21) Application number: 23161114.6
(22) Date of filing: 10.03.2023
(51) Int. Cl.: B32B 7/10, B32B 7/12, B32B 27/08, B32B 27/18, B32B 27/30, B32B 27/32, B32B 27/36, C08J 5/18, C08G 18/10, C08G 18/12, C09J 175/04

(54) **LAMINATION STRUCTURE**

(71) Applicant: Siegwerk Druckfarben AG & Co. KGaA, 53721 Siegburg (DE)
(72) Inventor: Bergman, Holger, 51570 Windeck (DE)
(74) Representative: Hepp Wenger Ryffel AG

(57) **Abstract**

The present invention is related to a laminate (1) for packaging applications, comprising a substrate layer (2) and an adhesive layer (5) present on a surface of said substrate layer (2), characterized in that said adhesive layer (5) is made from a one-component adhesive composition, wherein the functional groups of said one component consist of isocyanate moieties, and which composition does not contain any polyurethane, said polyurethane having a weight average molecular weight of 5000 g/mol or more, preferably 2500 g/mol or more, and most preferred of 1000 g/mol or more. The present invention is furthermore related to an article comprising said laminate.

## Description

The present invention is related to a lamination structure comprising an adhesive layer that is based on a one-component adhesive composition.

Laminates are a common structure and are used in a variety of technical areas, such as in flexible packaging.

The term "laminate" refers to a product that consists of a stack of layers, wherein one layer (an outermost layer or a core layer) is defined as substrate or substrate layer. Onto said substrate or substrate layer, at least one layer and preferably a stack of layers is provided, wherein said layer or stack of layers typically is or comprises a printed layer or several printed layers. Typically, a further substrate or substrate layer is applied on the remote side of said layer or stack of layers, so that said layer or stack of layers is sandwiched between these substrate layers and protected from environmental influences.

In such a laminate, the one or more printed layers are typically connected to a substrate layer via a primer layer and/or an adhesive layer. Such a primer layer and/or an adhesive layer in a laminate has to meet specific requirements with respect to adhesion, reduced brittleness (i.e. increased flexibility) and especially has to achieve a high bond strength value.

An adhesive layer is prepared from an adhesive composition. Adhesive compositions are commonly used to bond together a variety of substrates, for example plastic substrates such as polyethylene, polypropylene, polyester, or polyamide, or other kinds of substrates such as metal or paper.

The use of adhesives in different laminating end-use applications is generally known. For example, adhesives can be used in the manufacture of film/film and film/foil laminates used in the flexible packaging industry, especially for food packaging.

For example, a first laminate structure may be formed by applying one or more printing ink layers onto a first substrate, preferably with the aid of a primer layer that is first applied onto said first substrate, followed by application of the one or more printing ink layers onto said primer layer. An adhesive layer may then be applied onto the free surface of a second substrate, and then the laminate structures may be combined by a conventional lamination process using a conventional lamination machine.

Adhesive compositions for laminating applications are generally known. They can be solvent-based, water-based or solvent-free.

A commonly known solvent-based adhesive composition for laminating applications comprises a polyurethane. For laminating applications, typically in a two-component polyurethane-based adhesive composition is used that includes a first component comprising an isocyanate and/or a polyurethane prepolymer comprising free isocyanate groups, and a second component comprising one or more polyols, such as a polyether polyol or a polyester polyol.

The two components of the adhesive composition are formulated separately in a commonly used organic solvent such as methyl ethyl ketone, ethyl acetate or toluene, optionally together with one or more additives commonly used in adhesive compositions.

For use, the two components are combined in a predetermined ratio, thereby forming an adhesive composition that is then applied on the desired substrate surface. Another surface is brought into contact with the applied adhesive composition, and after curing of the adhesive composition, the desired laminated structure is formed.

An example of a suitable adhesive is a typical solvent-based 2K adhesive like Adcote 811A, preferably in combination with a typical hardener like 9L10 (both raw materials are commercially available from DOW).

Such a two-component adhesive composition has several drawbacks. The two components have to be stored separately, in order to prevent their premature reaction which would result in premature curing. This doubles the necessary storage facilities. Furthermore, as two components have to be used this results also in increased raw material costs.

When used, the two components have to be mixed with each other in the correct ratio. This has to be done at a manufacturer's site and is a source of possible dosing errors. Also, it might happen due to e.g. production issues that an unused amount of the components may be left and (due to their limited pot life) have to be disposed as waste.

Finally, cleaning of equipment required for curing a two-component adhesive composition can be cumbersome.

While one-component adhesive compositions are known as such, for laminating applications they have not been deemed suitable.

In WO 2020/117399 A1, it was suggested to use a lamination adhesive composition that was designated as general-purpose mono-component adhesive having predominantly isocyanate groups. As an example, the commercial adhesive Adcote^{™} 331 was mentioned. Adcote^{™} 331 is an isocyanate-terminated polyether urethane adhesive, i.e. an isocyanate-terminated polyurethane adhesive. According to WO 2020/117399 A1, Adcote^{™} 331 comprises a predominant content of isocyanate groups. Further details about Adcote^{™} 331 are not known.

In WO 2020/117399 A1 it is explicitly disclosed that said purpose mono-component adhesive is to be used in combination with a functionalized film layer, wherein the at least one functionalized film layer comprises a polar-reactive group polyolefin layer. In WO 2020/117399 A1, as polar-reactive group polyolefin layer only a grafted polyolefin layer was explicitly tested.

In the examples of WO 2020/117399 A1 it was shown that a corona-treated LLDPE copolymer substrate was not satisfactory for use with said mono-component adhesive Adcote^{™} 331. The teaching of WO 2020/117399 A1 is limited to the use of a mono-component isocyanate-terminated polyurethane adhesive in combination with a polyolefin layer that is functionalized by grafting. Other substrate layers such as corona-treated substrates were found to result in insufficient characteristics of the laminate.

It was the problem of the present invention to provide a laminate for packaging applications that overcomes the problems associated with the use of a two-component adhesive composition in the manufacture of said substrate.

The above problem was solved by the present invention.

In detail, the present invention is related to a laminate for packaging applications, comprising a substrate layer and an adhesive layer present on a surface of said substrate layer, characterized in that said adhesive layer is made from a one-component adhesive composition, wherein the functional groups of said one component consist of isocyanate moieties, and which composition does not contain any polyurethane, said polyurethane having a molecular weight of 5000 g/mol or more, preferably 2500 g/mol or more, and most preferred of 1000 g/mol or more.

It has been found that the disclosed one-component adhesive composition, wherein the functional groups of said one component consist of isocyanate moieties, can be used for laminating applications in combination with a substrate that is non-grafted with any polar component, but is merely corona-treated or even untreated.

The present invention provides a solution that is broadly applicable for lamination and overcomes the drawbacks associated with two-component adhesive compositions. No mixing of separate components at a manufacturer's site is necessary, and so no mixing errors can occur. No problem with any remaining components occurs, since no mixing of separate components is required that might give rise to any remaining unused raw material. Thus, waste is reduced or avoided. No mixing equipment for mixing separate components of a two-component adhesive composition has to be provided, reducing both costs and cleaning time. Raw material costs and storage costs can be reduced.

Furthermore, in the one-component adhesive composition of the present invention no polyhydroxy polyol component is present. This results in a reduction of the coating weight of the adhesive layer made from the one-component adhesive composition according to the present invention. The adhesive layer made from the one-component adhesive composition according to the present invention thus also has a higher content of recyclable material (percentage of polymer in the packaging structure) and improves the overall recyclability of the laminate made therefrom, respectively a flexible packaging that is made from said laminate.

The one-component adhesive composition according to the present invention has a lower formulation complexity, due to its simpler composition, and also has more robust application properties compared to conventional two-component adhesive compositions.

In particular, it has been found that with the one-component adhesive composition according to the present invention higher bond strength values can be obtained at a lower coating weight, as compared to conventional two-component adhesive compositions.

Also, faster curing is observed with the one-component adhesive composition according to the present invention, as compared to conventional two-component adhesive compositions.

With the one-component adhesive composition according to the present invention, also a very good stability under retort conditions (as typically used for sterilization purposes) is observed.

The one-component adhesive composition according to the present invention is solvent-based. Thus, the composition comprises at least one organic solvent. Any organic solvent that is conventionally used in an adhesive composition may be used. Examples are esters such as ethyl acetate, n-propyl acetate, isopropyl acetate, or neopentyl acetate. The one-component adhesive composition according to the present invention can also comprise a mixture of any of the above organic solvents. Preferably, the one-component adhesive composition according to the present invention comprises 10 to 80 wt.-%, more preferably 20 to 70 wt.- %, and especially preferred 30 to 65 wt.-%, based on the weight of the entire adhesive composition, of said at least one solvent.

The one-component adhesive composition according to the present invention is composed such that the functional groups of said one component consist of isocyanate moieties. In other words the one component does not have any other functional groups than isocyanate moieties. By "functional group", chemical groups are meant which contribute to a curing reaction to obtain the adhesive layer from said one-component adhesive composition. Such functional groups are free (i.e. unreacted) functional groups and no internal groups such as ether, ester or urethane groups which are derived from a reaction of starting materials (such as from two alcohols, an alcohol and an acid, or an alcohol and an isocyanate).

The one-component adhesive composition according to the present invention comprises an isocyanate component comprising at least one free isocyanate moiety. Said isocyanate component can be an isocyanate monomer, a polyisocyanate (i.e. an isocyanate having more than one unreacted isocyanate moieties) or an isocyanate oligomer.

Said isocyanate component can be selected from the group consisting of aromatic polyisocyanates, aliphatic polyisocyanates, cycloaliphatic polyisocyanates, and combinations of two or more thereof. An "aromatic polyisocyanate" is a polyisocyanate that contains one or more aromatic rings. An "aliphatic polyisocyanate" contains no aromatic rings. A "cycloaliphatic polyisocyanate" is an aliphatic polyisocyanate that contains at least one aliphatic ring structure.

Suitable aromatic mono or polyisocyanates comprise 3 to 16 carbon atoms, more preferably 4 to 12 carbon atoms, and 2 to 5, preferably 2-4 free unreacted isocyanate moieties. Preferred polyisocyanates include, but are not limited to, 1,3- and 1,4-phenylene diisocyanate, 1,5-naphthylene diisocyanate, 2,6-tolulene diisocyanate, 2,4-tolulene diisocyanate (2,4-TDI), 2,4'-diphenylmethane diisocyanate (2,4'-MDI), 4,4'-diphenylmethane diisocyanate (4,4'-MDI), 3,3'-Dimethyl-4,4'-Biphenyldi-isocyanate (TODI), polymeric isocyanates, and combinations of two or more thereof.

Suitable aliphatic mono or polyisocyanates may be linear or branched aliphatic hydrocarbons with 3 to 16 carbon atoms, more preferably 4 to 12 carbon atoms, in the alkylene residue, and 2 to 5, preferably 2-4 free unreacted isocyanate moieties.

Suitable cycloaliphatic mono or polyisocyanates advantageously have 4 to 18 carbon atoms, more preferably 4 to 12 carbon atoms, and 2 to 5, preferably 2-4 free unreacted isocyanate moieties.

Examples of suitable aliphatic and cycloaliphatic polyisocyantes include, but are not limited to, cyclohexane diisocyanate, methylcyclohexane diisocyanate, ethylcyclohexane diisocyanate, propylcyclohexane diisocyanate, methyldiethylcyclohexane diisocyanate, propane diisocyanate, butane diisocyanate, pentane diisocyanate, hexane diisocyanate, heptane diisocyanate, octane diisocyanate, nonane diisocyanate, nonane triisocyanate, such as 4-isocyanatomethyl-1,8-octane diisocyanate (TIN), decane di- and triisocyanate, undecane di- and triisocyanate and dodecane diand triisocyanate, isophorone diisocyanate (IPDI), hexamethylene diisocyanate (HDI), diisocyanatodicyclohexylmethane (H1gMDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), xylylene diisocyanate (XDI), tetramethylxylylene diisocyanate, and dimers, trimers (isocyanurates) such as the trimer of hexane-1,6 diisocyanate, and mixtures of the above.

According to a preferred embodiment of the present invention, said isocyanate component may also be a compound that is derived from a reaction of one or more of the above polyisocyanates with a compound having an isocyanate-reactive functional group. For example, monohydroxy (comprising only one reactive OH group) or polyhydroxy (comprising more than one reactive OH group) compounds may be reacted with one or more of the above polyisocyanates, resulting in urethanes. As an example, the reaction products of ethylene glycol, propylene glycol, neopentyl glycol, or trimethylolpropane with e.g. an aliphatic diisocyanate like hexane-1,6-diisocyanate or an aromatic diisocyanate like toluene-2,4-diisocyanate may be mentioned. One preferred urethane is the reaction product of trimethylolpropane with toluene-2,4-diisocyanate, where all three OH groups of the trimethylolpropane are reacted with toluene-2,4-diisocyanate:

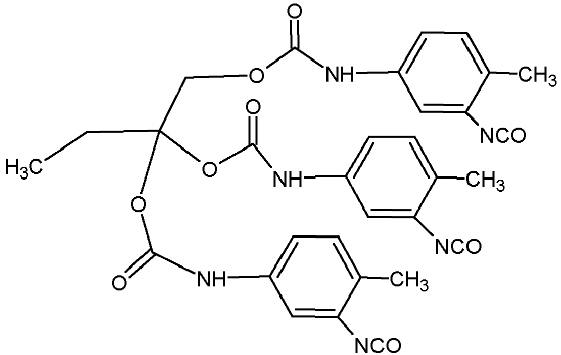

Although this compound contains three urethane moieties, it is not an urethane oligomer or a polyurethane, since it is not composed of any repeating unit.

Likewise, monoamine or polyamine compounds, or monothiol or polythiol compounds may be reacted with one or more of the above polyisocyanates, which would result in urea compounds or thiourethane compounds.

According to a preferred embodiment of the present invention, said isocyanate component may also be an oligomer. An oligomer may be obtained from the reaction of one or more of the above polyisocyanates with a compound having at least two isocyanate-reactive functional groups, wherein a plurality of repeating units is generated. Such an oligomer has to comprise at least one free isocyanate (NCO) group. As an example, the reaction of ethylene glycol and hexane-1,6-diisocyanate under such conditions may be mentioned that an oligomer of the following formula is obtained:

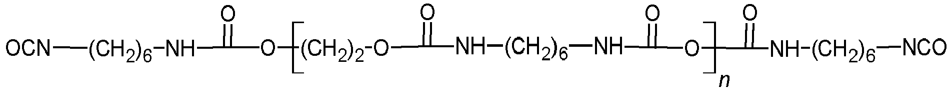

An oligomer is typically defined as having a small number of repeating units (e.g. in the above formula n is small), whereas a polymer is typically defined as having a large number of repeating units (e.g. in the above formula n is large). However, there is no sharp distinction between an oligomer and a polymer. In accordance with the present invention, an oligomer is defined as having a weight average molecular weight (Mw) below 5000 g/mol.

The one-component adhesive composition according to the present invention may also comprise combinations of the above isocyanate components comprising at least one free isocyanate moiety.

Preferably, the one-component adhesive composition according to the present invention comprises 90 to 20 wt.-%, more preferably 80 to 30 wt.-%, and especially preferred 30 to 65 wt.-%, based on the weight of the entire adhesive composition, of said at least one isocyanate component comprising at least one free isocyanate moiety.

It is, however, important that the composition does not contain any polyurethane, said polyurethane having a weight average molecular weight of 5000 g/mol or more, preferably 2500 g/mol or more, and most preferred of 1000 g/mol or more.

A polyurethane is defined as a polymer derived from the reaction of one or more of the above polyisocyanates with a compound having at least two isocyanate-reactive hydroxy groups, wherein a plurality of repeating units comprising urethane groups is generated. For example, in the formula shown above and reproduced below again, the repeating units (in the bracket) comprise urethane groups, and n is set such that the compound has a weight average molecular weight (Mw) of at least 5000 g/mol:

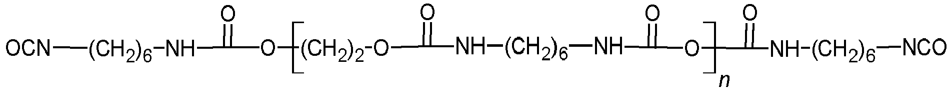

The one-component adhesive composition according to the present invention may additionally comprise one or more additives typically used in adhesive compositions. Examples of such additives include, but are not limited to, tackifiers, plasticizers, rheology modifiers, adhesion promoters, antioxidants, fillers, colorants, surfactants, catalysts, and combinations of two or more thereof. Preferably, the one-component adhesive composition according to the present invention comprises 0 to 5 wt.-%, more preferably 0.1 to 4 wt.-%, and especially preferred 0.5 to 3 wt.-%, based on the weight of the entire adhesive composition, of at least one additive.

The one-component adhesive composition according to the present invention may be prepared by mixing the above ingredients by a conventional mixing process, such as stirring using a stirrer. Depending on the isocyanate present in the composition, preparation of the one-component adhesive composition according to the present invention may be carried out under an inert gas atmosphere (e.g. under nitrogen).

The laminate (laminated product) of the present invention is characterized by the presence of an adhesive layer made from the one-component adhesive composition composition described above, on a surface of a substrate layer.

According to the present invention, the terms "substrate" and "substrate layer" are used interchangeably.

According to the present invention, the term "laminate" refers to a product that consists of a stack of layers, wherein one layer (an outermost layer or a core layer) is defined as substrate or substrate layer. For example, the substrate layer may be a plastic layer, preferably a transparent plastic layer. A laminate may also preferably comprise more than one of those substrate layers, most preferably as outermost layers, and in between these substrate layers there may be provided a printed layer or several printed layers, as well as other functional layers. These intermediate layers are protected from environmental influences. In such a laminate, the one or more printed layers are typically connected to a substrate layer via a primer layer and/or an adhesive layer.

According to a preferred embodiment, the laminate of the present invention comprises two substrate layers.

According to a preferred embodiment of the present invention, on the surface of the adhesive layer remote from said substrate layer there is a stack of layers comprising a second substrate layer. In other words, there is an adhesive layer made from the one-component adhesive composition composition described above, on a surface of a substrate layer, and on the other surface of the adhesive layer, there is applied said stack of layers comprising a second substrate layer.

The substrate layers of said laminate can be the same or different and any substrate such as a plastic substrate. Preferably, the substrate is a plastic substrate as conventionally used in the field of plastic laminates. Examples of suitable plastic substrates are polyethylene (PE), for example low density polyethylene (LDPE), polypropylene (PP), for example cast polypropylene (CPP) or oriented polypropylene (OPP), polyamide (PA) or polyethylene terephthalate (PET). These substrates may be coated with a metallization layer. For example, a substrate may be coated with a layer of a metal oxide such as aluminium oxide. An example is PP ALOX, which is a polypropylene substrate that has been coated with an aluminium oxide layer. Typically, such metallization provides for barrier properties.

According to a preferred embodiment of the present invention, said substrate layers are each composed of a material selected from the group consisting of polyethylene, polypropylene, preferably oriented polypropylene or metallized oriented polypropylene, polyethylene terephthalate, and polylactide.

According to a preferred embodiment of the present invention, at least one of said substrate layers, namely the substrate layer onto which the adhesive layer is to be applied, is selected from the group consisting of a non-functional substrate layer and a corona-treated substrate layer. It has been found that the adhesive layer according to the present invention can be used for laminating applications in combination with a substrate that is non-grafted with any polar component, but is merely corona-treated or even untreated.

Corona treatment is the most widely used surface treatment method in the plastic film and other related industries and has been used for a long time. Corona treatment increases the surface energy of plastic films, foils and paper to improve wettability and adhesion of inks, coatings and adhesives. Corona treatment uses a low temperature corona discharge plasma to impart changes in the properties of a surface. The corona plasma is generated by the application of high voltage to an electrode that has a sharp tip. Materials such as plastics or paper may be passed through the corona plasma thus generated in order to change the surface energy of the material. Corona treatment and devices for performing corona treatment are well-known.

According to a preferred embodiment of the present invention, said stack of layers furthermore comprises, between said second substrate layer and said adhesive layer, at least one additional layer selected from the group consisting of a primer layer and a functional coating, for example an oxygen barrier layer.

According to a preferred embodiment of the present invention, a primer layer is applied onto one of the substrates by applying a primer composition thereto. The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions. Moreover, these required properties can, depending on the substrate, comprise sufficient smoothness so that a printing ink layer applied thereupon shows the desired gloss.

According to an especially preferred embodiment of the present invention, a primer layer that is suitable for delamination and/or deinking is applied onto one of the substrates. This involves characteristics such as very good solubility in an alkaline aqueous medium in combination with very good overprintability and water resistance. Such a primer layer that is suitable for deinking is disclosed, for example, in WO 2021/165081 A1.

In said especially preferred embodiment, first a primer layer is applied onto the substrate, and a printed layer is applied (directly or indirectly via at least one intermediate layer) onto the primer layer. This allows efficient deinking of the substrate by dissolving the primer layer and thus removing the printed layer that is arranged on said primer layer, from the substrate.

The primer layer can be applied onto the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5^{th} ed. 1993, p, 33-53. Also the characteristics of gravure and flexographic inks are known to the skilled man. Reference may be made, for example, to Leach/Pierce (Eds.), The printing ink manual, Blueprint, London, 5^{th} ed. 1993, p, 473-598. The respective content of those chapters is incorporated herein by reference.

The primer layer is preferably applied onto the substrate in such an amount that a coating weight of 0.2-1.5 g/m², preferably 0.4-1.3 g/m², and especially preferred 0.6-1.0 g/m² is obtained.

According to a preferred embodiment of the present invention, said laminate may further comprise a barrier layer, so that the barrier layer is between said substrate layers. Such barrier layers are known in the art. Preferably, said barrier layer is a gas impermeable or a gas resistant barrier layer. As an example, a barrier coating like an ethylene-vinylalcohol (EVOH) coating may be used for the purposes of the present invention. A preferred barrier layer is disclosed in WO 2023/285183 A1.

The barrier layer is preferably applied in a dry solids coating weight in the range from 0,2 g/m² to 2 g/m², preferably 0,5 g/m² to 1,5 g/m², more preferably 0,6 g/m² to 1,2 g/m².

According to a preferred embodiment of the present invention, said laminate further comprises, between said second substrate layer and said adhesive layer, at least one ink layer. Preferably, said at least one ink layer is selected from the group consisting of a white layer, a black ink layer, a colored ink layer, and combinations thereof.

According to a preferred embodiment of the present invention, at least one printing ink layer is applied on a side of said primer layer that is not in contact with one of said substrate layers. This results in a stack of printing ink layers that is provided between the adhesive layer and the primer layer.

The ink layer (s) used in the laminate of the present invention may be made from any ink conventionally used in flexible packaging applications. Such an ink can be applied on the substrate by any standard technique, preferably by flexographic or gravure printing.

According to a preferred embodiment of the present invention, a first laminate may be formed by applying the primer composition according to the present invention onto a second substrate and then applying one or more printing ink layer onto the free surface of the applied primer layer. The adhesive layer according to the present invention is then applied onto the free surface of the first substrate, and then the laminates may be combined by a conventional lamination process using a conventional lamination machine. As a result, in said embodiment the adhesive layer in the final laminate is between the first substrate layer described above and one printed layer.

According to another preferred embodiment of the present invention, the laminate according to the present invention may be composed of two substrate layers which are interconnected with an adhesive layer of the present invention. Such a laminate structure is representative for window areas of an article where no colours or white are provided.

The laminate according to the present invention has favourable properties. For example, the laminate according to the present invention is stable under retort conditions for sterilization, preferably at 110-140°C for 45-120 min. Such retort conditions are generally known. Retort is carried out in closed vessel or other equipment used for the thermal processing of foods. As example, static steam or rotary steam retort conditions should be mentioned.

Preferably, the laminate according to the present invention has a bond strength value, provided by the adhesive layer of the present invention, of higher than 1.5N/15mm, as measured with an Instron Universal device.

The present invention is furthermore related to an article, comprising a laminate as described above.

According to the present invention, said article is preferably a flexible packing.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging).

The present invention is furthermore related to a method of preparing a laminate as described above, comprising the step of applying a polyurethane-free one-component adhesive composition whose functional groups consist of isocyanate moieties onto a free surface of a substrate layer.

The present invention will now be described below in more detail by reference to non-limiting figures and examples.

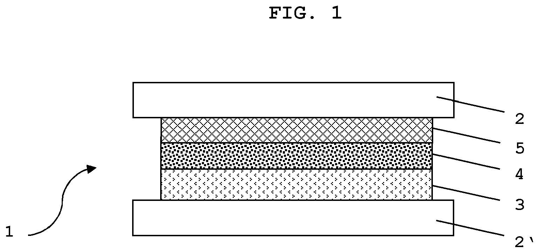

- Fig. 1: shows an illustration of a laminate according to an embodiment of the present invention.

In Fig. 1, a laminate 1 according to an embodiment of the present invention is shown. The laminate 1 comprises a first substrate 2, made from a plastic substrate such as PE or OPP, and a second substrate 2', made from a plastic substrate such as PE, PET, metOPP. The first substrate 2 and the second substrate 2' may be of the same or a different material.

On one surface of said second substrate 2', there is applied a primer layer 3 according to the present invention. On one surface of said primer layer 3 that is remote from the substrate 2', there is provided a printing ink layer 4.

One surface of said other substrate 2 is combined with the stack of substrate 2', primer layer 3 and printing layer 4 via an adhesive layer 5 according to the present invention.

### Examples

### Example 1

A one-component adhesive composition according to the present invention was prepared by mixing a polyisocyanate and ethyl acetate in the amounts given in table 1.

**Table 1**

| Component | Example 1a wt.-% | Example 1b wt.-% |
|---|---|---|
| Aliphatic polyisocyanate (MW 1130 g/mol) | 63 | |
| Aromatic polyisocyanate (MW 1152 g/mol) | | 39, 7 |
| Ethyl acetate | 37 | 60,3 |

For printing, the compositions were adjusted to a viscosity of 14-16 mm (DIN cup 4mm), using ethyl acetate.

### Example 2a

Onto a corona-treated (Softal device with maximum power of 1,6 kW, treatment conducted with 20 W/m² at a line speed of 200 m/min) PET film, a color ink layer was printed using the following conventional ink composition:

| Component | Wt.-% |
|---|---|
| Nitrocellulose binder | 8 |
| Polyurethane binder | 11 |
| Pigment | 13 |
| Solvent | 67 |
| Adhesion promoter | 1 |

The ink composition was adjusted to a viscosity of 28"/3 mm DIN cup and gravure printed using a Kochsiek printing machine at a coating weight of 0,8 - 2 GSM (g/m²).

Onto the free surface of said color ink layer, a white ink layer was printed using the following conventional ink composition:

| Component | Wt.-% |
|---|---|
| Nitrocellulose binder | 7 |
| Polyurethane binder | 19 |
| Pigment (TiO₂) | 30 |
| Solvent | 44 |

The ink composition was adjusted to a viscosity of 28"/3 mm DIN cup and gravure printed using a Kochsiek printing machine at a coating weight of 0,8 - 2 GSM (g/m²).

Onto a corona-treated (as above, with 20 W/m² at a line speed of 200 m/min) PE film, an adhesive layer was applied using the one-component adhesive composition according to example 1a, with an anilox roller at a dry coating weight of 1,5 GSM (g/m²).

The PE film coated with the adhesive layer was then laminated with the stack containing the PET film, the color ink layer and the white ink layer. Lamination was carried out with a Labo Combi 400 device (from Nordmecccanica)

### Example 2b

Example 2a was repeated, but using a color and a white ink composition having the following composition:
Color ink composition:

| Component | Wt.-% |
|---|---|
| PVC (polyvinyl chloride) binder | 9 |
| Pigment | 15 |
| Solvent | 67 |
| Stabilizer | 3 |
| Plasticizer and co-resins | 6 |

White ink composition:

| Component | Wt.-% |
|---|---|
| PVC (polyvinyl chloride) binder | 9 |
| Pigment (TiO₂) | 24 |
| Solvent | 57 |
| Stabilizer | 3 |
| Plasticizer and co-resins | 7 |

### Example 2c

Example 2a was repeated, but using a color and a white ink composition having the following composition:
Color ink composition:

| Component | Wt.-% |
|---|---|
| Polyurethane binder | 32 |
| Pigment | 9 |
| Solvent | 57 |
| Stabilizer | 2 |

White ink composition:

| Component | Wt.-% |
|---|---|
| Polyurethane binder | 30 |
| Pigment (TiO₂) | 34 |
| Solvent | 34 |
| co-resin | 2 |

### Example 2d

Example 2a was repeated, but with the one-component adhesive composition according to example 1b.

### Example 2e

Example 2b was repeated, but with the one-component adhesive composition according to example 1b.

### Example 2f

Example 2c was repeated, but with the one-component adhesive composition according to example 1b.

### Examples 2g-i

Examples 2d-2f were repeated, but the one-component adhesive composition according to example 1b was applied at a dry coating weight of 1,2 GSM (g/m²).

### Comparative example 2j

Example 2a was repeated, but with a commercial two-component adhesive composition (Morchem CF744/PL278A, a combination of a polyol and a polyisocyanate component) that was applied at a dry coating weight of 2,2 GSM (g/m²).

### Comparative examples 2k-l

Examples 2b and 2c were repeated, but with a commercial two-component adhesive composition (COIM 272/CA 12, a combination of a polyol and a polyisocyanate component) that was applied at a dry coating weight of 3 GSM (g/m²).

### Bond strength values (BSV)

Bond strength values were measured with an Instron 3365 device. The peel off was measured at a 90° angle.

The following results were obtained:

| Example | BSV (N/15 mm) |
|---|---|
| 2a | > 1.5 (film split) |
| 2b | > 2 (film split) |
| 2c | > 2 (film split) |
| 2d | > 1.5 (film split) |
| 2e | > 2 (film split) |
| 2f | > 2 (film split) |
| 2g | 2.8 |
| 2h | 2.0 |
| 2i | 2.7 |
| Comp. 2j | 1.7 |
| Comp. 2k | 1.8 |
| Comp. 2l | 2.6 |

Film split indicates that the bond strength value is so high that it cannot be measured, since the entire polymer film is torn before the layers could be separated.

It can be seen that in the examples according to the present invention using the inventive one-component adhesive a higher bond strength value could be obtained between the adhesive layer and the ink layer than with the commercial two-component adhesives, at a lower dry coating weight.

### Example 3

In order to show the suitability of the one-component adhesive for window areas of a flexible packaging (with no color or white ink layers present), a PE film was laminated as described in example 2a with a stack consisting of a coronae-treated PE film and an adhesive layer applied thereon, said adhesive layer being made from the one-component adhesive composition according to example 1b (as used in example 2d).

The resulting laminate was not separable under the bond strength value test conditions described above. Also under sealing conditions of 120°C and 3 bar for 1s, no separation could be observed. This example shows that a high bond strength value could be achieved in a window area and a corresponding sealing area.

### Example 4

Example 2d was repeated, but instead of the PET substrate an OPP substrate was used. On said OPP substrate, the ink compositions mentioned in example 2c were printed. Lamination with the corona-treated PE film provided with an adhesive layer made from the composition according to example 1b was performed as in example 2d.

Also in this example, excellent bond strength values were observed (film split as in example 2).

### Example 5a

Example 2f was repeated, but instead of the PET substrate a PE substrate was used as a substrate onto which the ink layers were applied.

The bond strength values were measured as discussed above, after one day and after two days.

After one day (under storage conditions of 15 N pressure and room temperature), a BSV of 1.5 N/15 mm was measured. After two days under the same storage conditions, film split occurred as in example 2f.

### Comparative example 5b

Example 5a was repeated, but with a commercially available two-component adhesive composition (Henkel LA 3644/LA 6055 in a mixing ratio of 20:1). After one day, a BSV of 1.2 N/15 mm was measured. After two days, a BSV of 1.5 N/15 mm was measured.

This example shows that with the one-component adhesive composition faster curing could be achieved than with a conventional two-component adhesive composition.

### Example 6a

In order to test the stability under retort conditions, example 2c was repeated, but with an aluminium/CPP film as substrate onto which the one-component adhesive composition according to example 1a was applied at a dry coating weight of 1.2 GSM. The BSV before retort conditions were applied was 1.8 N/15 mm.

Retort conditions of 131°C for 45 min in distilled water were applied onto the product in a Varioklav 75T RG device. Thereafter, the measured BSV was 1.8 N/15 mm, i.e. unchanged.

### Example 6b

Example 2f was repeated, but with an aluminium/CPP film as substrate onto which the one-component adhesive composition according to example 1b was applied at a dry coating weight of 1.2 GSM. The BSV before retort conditions were applied was 2.0 N/15 mm.

Retort conditions of 131°C for 45 min in distilled water were applied onto the product in a Varioklav 75T RG device. Thereafter, the measured BSV was 2.0 N/15 mm, i.e. unchanged.

Examples 6a and 6b show that with the one-component adhesive composition according to the present invention, under retort conditions no change in BSV and no lamination failures like channels occurred.

## Claims

1. A laminate (1) for packaging applications, comprising a substrate layer (2) and an adhesive layer (5) present on a surface of said substrate layer (2), **characterized in that** said adhesive layer (5) is made from a one-component adhesive composition, wherein the functional groups of said one component consist of isocyanate moieties, and which composition does not contain any polyurethane, said polyurethane having a weight average molecular weight of 5000 g/mol or more, preferably 2500 g/mol or more, and most preferred of 1000 g/mol or more.

2. Laminate according to claim 1, **characterized in that** said one-component adhesive composition comprises a mixture of polyisocyanates.

3. Laminate according to claim 1 or 2, **characterized in that** said one-component adhesive composition is solvent-based.

4. Laminate according to any one of claims 1 to 3, **characterized in that** said substrate layer (2) is selected from the group consisting of a non-functional substrate layer and a corona-treated substrate layer.

5. Laminate according to claim 3, **characterized in that** said substrate layer (2) is composed of a material selected from the group consisting of polyethylene, polypropylene, preferably oriented polypropylene or metallized oriented polypropylene, polyethylene terephthalate, and polylactide.

6. Laminate according to any one of claims 1 to 5, **characterized in that** on the surface of the adhesive layer (5) remote from said substrate layer (2) there is a stack of layers comprising a second substrate layer (2').

7. Laminate according to claim 6, **characterized in that** said second substrate layer (2') is composed of a material selected from the group consisting of polyethylene, polypropylene, preferably oriented polypropylene or metallized oriented polypropylene, polyethylene terephthalate, and polylactide.

8. Laminate according to claim 6 or 7, **characterized in that** said stack of layers furthermore comprises, between said second substrate layer (2') and said adhesive layer (5), at least one ink layer (4).

9. Laminate according to claim 8, **characterized in that** said at least one ink layer (4) is selected from the group consisting of a white layer, a black ink layer, a colored ink layer, and combinations thereof.

10. Laminate according to any one of claims 6 to 9, **characterized in** said stack of layers furthermore comprises, between said second substrate layer (2') and said adhesive layer (5), at least one additional layer selected from the group consisting of a primer layer (3) and a functional coating, for example an oxygen barrier layer.

11. Laminate according to any one of claims 1 to 10, **characterized in** said laminate (1) is stable under retort conditions for sterilization, preferably at 110-140°C for 45-120 min.

12. Article, comprising a laminate (1) according to any of claims 1 to 11.

13. Article according to claim 12, **characterized in** said article is a flexible packing.

14. Method of preparing a laminate (1) according to any of claims 1 to 11, comprising the step of applying a polyurethane-free one-component adhesive composition whose functional groups consist of isocyanate moieties onto a free surface of a substrate layer (2).

15. Method according to claim 14, **characterized in that** said substrate layer (2) is composed of a material selected from the group consisting of polyethylene, polypropylene, preferably oriented polypropylene or metallized oriented polypropylene, polyethylene terephthalate, and polylactide, and is preferably is selected from the group consisting of a non-functional substrate layer and a corona-treated substrate layer.
